(19) **Europäisches Patentamt / European Patent Office / Office européen des brevets**

(11) **EP 4 073 004 B1**

(12) **EUROPEAN PATENT SPECIFICATION**

(45) Date of publication and mention
of the grant of the patent:
**23.10.2024 Bulletin 2024/43**

(21) Application number: **20829999.0**

(22) Date of filing: **08.12.2020**

(51) International Patent Classification (IPC):
**C02F 5/10** *(2023.01)* **C02F 103/08** *(2006.01)*
**C02F 103/18** *(2006.01)*

(52) Cooperative Patent Classification (CPC):
**C02F 5/10;** C02F 2103/08; C02F 2103/18;
C02F 2303/22; Y02A 20/131

(86) International application number:
**PCT/JP2020/045697**

(87) International publication number:
**WO 2021/117727 (17.06.2021 Gazette 2021/24)**

(54) **COPOLYMERS SUITABLE FOR REDUCING THE FORMATION OF MAGNESIUM HYDROXIDE CONTAINING SCALE**

COPOLYMERE, DIE ZUR VERMINDERUNG DER BILDUNG VON MAGNESIUMHYDROXID-ENTHALTENDEM KESSELSTEIN GEEIGNET SIND

COPOLYMÈRES POUR LA RÉDUCTION DE FORMATION DE TARTRE CONTENANT DE L'HYDROXYDE DE MAGNÉSIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2019 PCT/JP2019/048292**

(43) Date of publication of application:
**19.10.2022 Bulletin 2022/42**

(73) Proprietor: **Kurita Water Industries Ltd.**
**Tokyo 164-0001 (JP)**

(72) Inventors:
• **WOLF, Florian**
**67065 Ludwigshafen (DE)**
• **HATER, Wolfgang**
**67065 Ludwigshafen (DE)**

• **DISCI-ZAYED, Duygu**
**67065 Ludwigshafen (DE)**
• **LEANEY, Deborah**
**67065 Ludwigshafen (DE)**
• **STRATMANN, Anika**
**67065 Ludwigshafen (DE)**

(74) Representative: **Meissner Bolte Partnerschaft mbB**
**Patentanwälte Rechtsanwälte**
**Postfach 86 06 24**
**81633 München (DE)**

(56) References cited:
**AU-A- 5 913 765 CA-A- 1 205 348**
**US-A- 4 517 098**

**Description**

**FIELD OF THE INVENTION**

The present invention relates to the use of certain copolymers based on acrylic acid for reducing or even inhibiting the formation of magnesium hydroxide containing scale, in particular in greywater treatment units and especially in seawater desalination units. The present invention also relates to a method for reducing or inhibiting the formation of magnesium hydroxide containing scale in a water-treatment unit for processing Mg containing water, in greywater treatment units of a syngas process or in seawater desalination units.

**BACKGROUND OF THE INVENTION**

The use of anti-scaling additives in aqueous systems to inhibit the deposition of scale formed from the salts of divalent metals such as calcium and magnesium is standard practice in a number of industries. The reduction in the build-up of scale, which can be achieved, is beneficial in reducing fouling of the system and the frequency with which the system must be closed down in order to remove scale deposits.

Numerous anti-scaling additives have been proposed as useful additives to aqueous systems including certain polyphosphates, polyacrylic acids, polymethacrylic acids, lignin sulphonic acids and their salts, tannin, naphthalene sulphonic acid formaldehyde condensation products, polyphosphates such as tripolyphosphate and hexametaphosphate, phosphonic acids, polymaleic acids and hydrolysed copolymers and terpolymers of maleic anhydride and the salts of these acids. The use of these anti-scaling additives, particularly the acrylic acid and maleic acid polymers, is widely recognised as being effective in inhibiting the build-up of calcium carbonate and calcium sulphate scale.

In seawater desalination plants, including thermal seawater desalination plants and reverse osmosis desalination units, $Mg(OH)_2$, $CaCO_3$ and $CaSO_4$ are the main deposits to be mitigated. They impair the function by precipitating on the desalination equipment surface causing performance loss and in case of thermal desalination plants reduction in the heat transfer. As a result, water production is reduced, and additional maintenance is required. Using proper additives would inhibit their formation and promote smooth operations. Z. Amjad, Corrosion 96, paper 230 and M. AK. Al-Sofi, European Conference on Desalination and the Environment 1999, Proc., Vol. 3, pp. 61-76 give a review on scale inhibition in seawater desalination units.

While the formation of scales based on $CaCO_3$ and $CaSO_4$ can be mitigated with the abovementioned anti-scaling additives, the formation of $Mg(OH)_2$ containing scale, hereinafter also referred to as brucite containing scale, is still a serious problem in water treatment units, where the Mg concentration of the water to be treated contains at least 15 ppm Mg, calculated as $Mg^{2+}$. As the solubility of $Mg(OH)_2$ decreases with increasing pH and also with increasing temperature, a particular risk for the formation of magnesium hydroxide containing scale exists at a pH of at least pH 5 and/or at temperatures of above 40°C . Conditions which favour the formation of magnesium hydroxide containing scale are usually met in seawater desalination plants. The problem of the formation of $Mg(OH)_2$ containing scale may also occur in greywater treatment units, where the concentration of magnesium salts in the water to be treated is often considerably high and which are usually operated at high pH values.

Unfortunately, numerous anti-scaling additives, which efficiently reduce the formation of calcium carbonate scale, including polyacrylic acids and polymaleates, fail to efficiently reduce magnesium hydroxide containing scale. Other anti-scaling additives, which may reduce the formation of magnesium hydroxide containing scale may be inefficient at high salinity of the water to be treated, as for example in seawater or brackish water. Frequently, combinations of polymaleic acids and phosphorous containing anti-scaling agents are required in order to achieve acceptable scale control in seawater desalination plants. In recent years, however, the phosphor discharge is the main issue in desalination industry and thus limiting the use of phosphorous-based anti-scaling agents is of particular importance.

EP0009304 A1 suggests using a copolymer of 25 to 90 mole% of maleic acid or maleic acid anhydride and 10 to 75% of allyl sulfonic acid for inhibiting scaling due to the formation of magnesium hydroxide in evaporative desalination units. Due to the high price of allyl sulfonic acid, the anti-scaling agents are not attractive from a commercial perspective.

EP0089189 A1 discloses a combination of polymaleic acid, a phosphonic acid salt, such as 1-hydroxyethylidene-1,1-diphosphonic acid or diethylene triamine penta(methylenephosphonic acid), and an iron sequestrant, such as citric acid or gluconic acid, and suggests this combination for reducing mixed scale formation in thermal or reverse osmosis desalination units.

EP0818423 A1 suggests using a combination of polymaleic acid having a weight average molecular weight of from 200 to 2000 and a phosphino acrylic acid telomere having a weight average molecular weight of from 800 to 5000 for inhibiting the formation of a magnesium hydroxide containing scale. The anti-scaling agents still contain considerable amounts of phosphorous.

S. Patel et al, Desalination 124 (1999) 63-74 investigate certain commercial anti-scaling agents with regard to their capability of inhibiting $Mg(OH)_2$, $CaCO_3$ and $CaSO_4$ scales in thermal seawater desalination units.

A. Hamzah et al., Desalination 259 (2015) 22-25 describe novel anti-scaling agents based on modified polyacrylic acids having hydrophobic end groups. These novel anti-scaling agents provide good inhibition of $CaCO_3$ scales.

US 4517098 suggests copolymers of 85 - 95% by weight of acrylic acid and 3 - 15% by weight of one or more $C_2$-$C_8$-alkyl acrylates or $C_1$-$C_8$-alkyl methacrylates having a molecular weight between 2000 and 5000 g/mol as scale inhibitors for $CaCO_3$, $CaSO_4$ scale. The copolymers disclosed therein show performance against $CaCO_3$, $CaSO_4$ crystal formation inhibition and dispersing capability against kaolin and calcium carbonate particles.

AU59137/65 relates to a method for preventing the formation of scale in distillation and evaporation apparatuses using essentially linear co- and terpolymers formed from at least one monomer containing acid groups or precursors thereof, such as acrylic acid, methacrylic acid, the salts thereof, or maleic acid (anhydride). A specific example is a copolymer obtained from 10% ethyl acrylate and 90% acrylic acid. The molecular weights of the copolymers are in the range of 1,000 to 50,000, preferably from 15,000 to 25,000. The acrylic acid/ethyl acrylate copolymer used in the examples has a molecular weight of 13,000 and is used against $Mg(OH)_2$ and $CaCO_3$ scale. The effect of the copolymer on the scale-forming matter in sea water and other hard water is shown indirectly by measurements of the heat transfer coefficient. An effect of said copolymer on the inhibition of the formation of brucite could however not be confirmed by the present inventors. In any case there is room for improvement.

CA 1,205,348 relates to a process for inhibiting or preventing the deposit of scale, in particular of alkaline earth metal scale such as magnesium hydroxide, in desalination processes using maleic anhydride copolymers as scale inhibitor. In the examples, the dispersive effect of maleic anhydride copolymers (i.a. a maleic anhydride/diisobutylene copolymer) in alkalinized sea water is examined and compared with that of an acrylic acid/ethyl acrylate copolymer with a molar ratio of acrylic acid and ethyl acrylate of 4:1 and a molecular weight of 2000. It is not indicated whether the molecular weight is the number-average ($M_n$) or the weight average ($M_w$) molecular weight; nor is it indicated whether the molecular weight relates to the polymer in its acid or in its salt form. This comparative acrylic acid/ethyl acrylate copolymer is said to have a very weak dispersive effect on the magnesium hydroxide-containing scale.

While the maleic anhydride copolymers of CA 1,205,348 as well as the comparative acrylic acid/ethyl acrylate copolymer show a dispersing effect on $Mg(OH)_2$ particles and possibly other scale matter not explicitly identified in the examples of this document (this effect being only weak in case of the comparative acrylic acid/ethyl acrylate copolymer), meaning that the copolymers used in this document disperse already present solid matter and thus reduce the deposition thereof on surfaces, it is desirable to avoid the formation of magnesium hydroxide-containing solid matter from the outset. In other words, it is desirable not only to keep already formed solid matter in dispersion and avoid its deposition, but additionally or alternatively to suppress the formation of magnesium hydroxide-containing crystals or amorphous forms.

## SUMMARY OF THE INVENTION

It is an object of the present invention to provide an anti-scaling agent, which efficiently reduces or even inhibits the formation of magnesium hydroxide containing scale without requiring phosphorous containing compounds. The anti-scaling agent should also reduce or even inhibit the formation of other calcium- and magnesium-containing scales, in particular calcium-containing scales, such as the typically occurring $CaCO_3$ or $CaSO_4$ scales. In particular, the anti-scaling agent should not be limited to a dispersing effect, but instead or at least additionally suppress the formation of magnesium hydroxide-containing solid matter from the outset.

It was surprisingly found that certain copolymers, which consist of at least 95% by weight, based on the total weight of the copolymer in its acid form, of a combination of polymerized units of acrylic acid and polymerized units of a $C_1$-$C_3$ alkyl acrylate, efficiently reduce or even inhibit the formation of magnesium hydroxide containing scale in water bearing systems, where the formation of magnesium hydroxide containing scale is to be expected, if the amount of polymerized units of the $C_1$-$C_3$ alkyl acrylate is in the range from 3 to 30% by weight, based on the total weight of the copolymer in its acid form, and if the copolymer in the form of its sodium salt has a weight average molecular weight Mw in the range from 500 to 4000 g/mol, as determined by gel permeation chromatography.

Therefore, a first aspect of the present invention relates to the use of the copolymers as defined herein for reducing or even inhibiting the formation of magnesium hydroxide containing scale, as defined in claim 1.

A second aspect of the present invention also relates to a method for reducing the formation of magnesium hydroxide containing scale in water-treatment units for processing Mg containing water, which comprises the addition of a copolymer as defined herein to the Mg containing water to be treated in the water-treatment unit, as defined in claim 12.

Without being bound by theory, it is believed that the copolymers as defined herein hamper the crystallisation of magnesium hydroxide, i.e. $Mg(OH)_2$, from the Mg containing water and thereby reduce or inhibit the formation of insoluble $Mg(OH)_2$. The copolymers as described herein may additionally have a dispersing effect for insoluble $Mg(OH)_2$ and thus prevent the formation of large-area magnesium hydroxide containing deposits.

The present invention is associated with several benefits. First of all, the copolymers as defined herein provide for efficient reduction or inhibition of the formation of magnesium hydroxide containing scale in water bearing systems, where formation of insoluble magnesium hydroxide is likely to occur. While it is possible to apply the copolymers defined herein in combination with one or more further anti-scaling agents, in particular with a scale dispersant, the copolymers defined herein do not require phosphorous containing anti-scaling agents that are normally required for achieving efficient reduction or inhibition of the formation of magnesium hydroxide containing scale. Apart from that, the copolymers defined herein have a high calcium tolerance, as they do not form insoluble complexes with calcium salts. Rather, they also provide efficient inhibition of the formation of other scales, in particular Ca scales, e.g. scales based on $CaCO_3$ and/or $CaSO_4$. Furthermore, they show a good inhibition of magnesium hydroxide containing scale at high salinity and thus can be used for the treatment of water having high salinity, such as seawater or brackish water. Moreover, the copolymers of the present invention are easily prepared from readily available and inexpensive monomers by standard copolymerization techniques.

## DETAILED DESCRIPTION OF THE INVENTION

Here and in the following, magnesium hydroxide containing scale refers to scale which contains crystalline magnesium hydroxide. In particular, the magnesium hydroxide containing scale predominately contains crystalline magnesium hydroxide or essentially consists thereof. This crystalline magnesium hydroxide is typically present in the brucite form. Thus, the Mg content in magnesium hydroxide containing scale, calculated as elemental Mg, is frequently at least 20% by weight based on the dry scale. Magnesium hydroxide containing scale can usually be identified by one or more of the characteristic reflections of brucite present in a powder X-ray diffractogram, in particular by one or more reflections, quoted as $2\theta$ values (25°C and Cu-K$\alpha$ radiation) at: $18.61 \pm 0.10°$, $37.95 \pm 0.10°$, $50.08 \pm 0.10°$ and $58.50 \pm 0.10°$.

Here and in the following, the term "$C_1$-$C_3$ alkyl" refers to methyl, ethyl, n-propyl and isopropyl.

Here and in the following, the phrase "reduction or inhibition of the formation of magnesium hydroxide containing scale" means that the formation of magnesium hydroxide containing scale, in particular brucite containing scale, in a water bearing system is significantly reduced by at least 15%, in particular by at least 20% or at least 25% compared to a water bearing system without anti-scaling agent.

Here and in the following, water-treatment unit(s) means any device or arrangement of devices, wherein water is treated and where internal surfaces are in contact with the water to be treated.

Unless specified otherwise, where the amounts or concentrations of components are given as "ppm", this corresponds to 1 g of component per 1,000,000 g of reference substance. If the unit "ppm" is used to define the concentration of a component in water, given the density of water as close to 1 g/l, 1 ppm can also be understood as 1 g of the component per 1 $m^3$ of water.

The copolymers of the present invention have a weight average molecular weight $M_W$ in the range from 500 to 4000 g/mol, in particular in the range from 700 to 4000 g/mol, such as 700 to 3000 g/mol; more preferably in the range from 800 to 4000 g/mol, such as 800 to 3000 g/mol and preferably 800 to 2500 g/mol; especially in the range from 1000 to 4000 g/mol, such as 1000 to 3000 g/mol or preferably 1000 to 2000 g/mol; and very specifically >1000 to 4000 g/mol, more specifically >1000 to 3000 g/mol and most specifically >1000 to 2000 g/mol, as determined by gel permeation chromatography of the sodium salt in buffered water at pH 7. The number average molecular weight $M_N$ of the copolymers of the present invention in the form of their sodium salts is frequently in the range from 300 to 3000 g/mol, in particular in the range from 320 to 2000 g/mol, more preferably in the range from 350 to 1800 g/mol and especially in the range from 350 to 1500 g/mol, as determined by gel permeation chromatography. Frequently, the ratio of the weight average molecular weight Mw to the number average molecular weight Mn of the copolymer in the form of its sodium salt, i.e. the ratio $M_W/M_N$ is in the range from 1.1 to 10, in particular in the range from 2 to 6.

Both weight average molecular weights (Mw) and number average molecular weights (Mn) as referred herein relate to the molecular weight of the sodium salt of the respective copolymer, which is determined by gel permeation chromatography, in the following abbreviated as GPC. Gel permeation chromatography is usually carried out by using crosslinked acrylate copolymers of defined pore size as stationary phase, water buffered to pH 7 as the eluent and polyacrylic acid sodium salts as standards. Further details on GPC are given below in the experimental part.

With regard to the use of the copolymers for reduction or inhibition of the formation of magnesium hydroxide containing scale, the amount of polymerized units of the $C_1$-$C_3$ alkyl acrylate is preferably in the range of 4 to 28% by weight, in particular in the range of 5 to 27% by weight, based on the total weight of the copolymer in the form of its sodium salt. Particular preference is also given to copolymers, where the amount of polymerized units of the $C_1$-$C_3$ alkyl acrylate is preferably in the range of 5 to 28% by weight or in the range of 10 to 27% by weight or in the range from 12 to 25% by weight, based on the total weight of the copolymer in the form of its sodium salt.

The molar ratio of polymerized acrylic acid to the polymerized $C_1$-$C_3$ alkyl acrylate is usually in the range from 70:30 to 97:3, in particular in the range from 75:25 to 96:4 and especially in the range from 78:22 to 95:5. Particular preference is also given to copolymers, where the molar ratio of polymerized acrylic acid to the polymerized $C_1$-$C_3$ alkyl acrylate is in the range from 75:25 to 95:5 or in the range from 78:22 to 90:10 or in the range from 80:20 to 88:12.

Preference is given to copolymers, where the polymerized $C_1$-$C_3$ alkyl acrylate monomer is ethyl acrylate or a mixture thereof with another $C_1$-$C_3$ alkyl acrylate. Particular preference is given to copolymers, where the polymerized

$C_1$-$C_3$ alkyl acrylate is ethyl acrylate or comprises at least 90% by weight or ethyl acrylate, based on the total amount of polymerized $C_1$-$C_3$ alkyl acrylate.

Besides polymerized acrylic acid and the polymerized $C_1$-$C_3$ alkyl acrylate, the copolymers may comprise up to 5% by weight, especially at most 2% by weight and at least at most 1% by weight, or even 0% by weight, based on the total amount of monomers forming the copolymer, of one or more polymerized monomers, which are different from acrylic acid and the $C_1$-$C_3$ alkyl acrylate. Examples of such monomers include, but are not limited to, monoethylenically unsaturated monocarboxylic acids having 4 to 6 carbon atoms, such as methacrylic acid, monoethylenically unsaturated dicarboxylic acids having 4 to 6 carbon atoms, such as maleic acid, or the anhydrides thereof, such as maleic anhydride, water-soluble neutral monoethylenically unsaturated monomers having a solubility in deionized water of at least 80 g/L at 20°C, including the amides of monoethylenically unsaturated monocarboxylic acids having 3 to 6 carbon atoms, such as acrylamide or methacrylamide, the hydroxy-$C_2$-$C_4$-alkyl esters of monoethylenically unsaturated monocarboxylic acids having 3 to 6 carbon atoms, such as hydroxyethyl acrylate, hydroxypropyl acrylate, hydroxyethyl methacrylate, or hydroxypropyl methacrylate. In particular, the copolymers of the present invention do not contain any ethylenically unsaturated monomer having a phosphor containing functional group or a sulfur containing functional group.

Particular preference is given to copolymers which do not contain more than 1000 ppm of phosphorous, in particular less than 500 ppm of phosphorous.

Particular preference is given to copolymers, which consist to at least 95% by weight, in particular at least 98% by weight and especially at least 99% by weight, based on the total weight of the polymerized monomers of acrylic acid and ethyl acrylate, where the molar ratio of polymerized acrylic acid to the polymerized ethyl acrylate is preferably in the range from 70:30 to 97:3, in particular in the range from 75:25 to 96:4 and especially in the range from 78:22 to 95:5. Particular preference is also given to copolymers, which consist to at least 95% by weight, in particular at least 98% by weight and especially at least 99% by weight, based on the total weight of the polymerized monomers of acrylic acid and ethyl acrylate, where the molar ratio of polymerized acrylic acid to the polymerized ethyl acrylate is preferably in the range from 75:25 to 95:5 or in the range from 78:22 to 90:10 or in the range from 80:20 to 88:12.

Even more preference is given to copolymers, which consist to at least 95% by weight, in particular at least 98% by weight and especially at least 99% by weight, based on the total weight of the polymerized monomers of acrylic acid and ethyl acrylate, where the molar ratio of polymerized acrylic acid to the polymerized ethyl acrylate is preferably in the range from 70:30 to 97:3, in particular in the range from 75:25 to 96:4 and especially in the range from 78:22 to 95:5, and where the weight average molecular weight $M_W$ of the copolymer in the form of its sodium salt ranges from 700 to 4000 g/mol, such as 700 to 3000 g/mol; preferably from 800 to 4000 g/ mol, such as 800 to 3000 g/mol or 800 to 2500 g/mol; in particular from 1000 to 4000 g/mol, such as 1000 to 3000 g/mol or 1000 to 2500 or 1000 to 2000 g/mol; specifically from >1000 to 4000 g/mol, more specifically from >1000 to 3000 g/mol, very specifically from >1000 to 2000 g/mol, as determined by gel permeation chromatography in buffered water at pH 7, where the number average molecular weight $M_N$ of the copolymers in its sodium form is in the range from 300 to 3000 g/mol, in particular in the range from 320 to 2000 g/mol, especially in the range from 350 to 1500 g/mol, as determined by gel permeation chromatography in buffered water at pH 7, and where the ratio $M_W/M_N$ is in the range from 1.1 to 10, in particular in the range from 2 to 6. Even more preference is also given to copolymers, which consist to at least 95% by weight, in particular at least 98% by weight and especially at least 99% by weight, based on the total weight of the polymerized monomers of acrylic acid and ethyl acrylate, where the molar ratio of polymerized acrylic acid to the polymerized ethyl acrylate is preferably in the range from 75:25 to 95:5 or in the range from 78:22 to 90:10 or in the range from 80:20 to 88:12, and where the weight average molecular weight $M_W$ of the copolymer in the form of its sodium salt ranges from 700 to 4000 g/ mol, such as 700 to 3000 g/mol; preferably from 800 to 4000 g/mol, such as 800 to 3000 g/mol or from 800 to 2500 g/mol; in particular from 1000 to 4000 g/mol, such as 1000 to 3000 g/mol or 1000 to 2500 or 1000 to 2000 g/mol; specifically from >1000 to 4000 g/mol, more specifically from >1000 to 3000 g/mol, very specifically from >1000 to 2000 g/mol, as determined by gel permeation chromatography in buffered water at pH 7, where the number average molecular weight $M_N$ of the copolymers in its sodium form is in the range from 300 to 3000 g/mol, in particular in the range from 320 to 2000 g/mol, especially in the range from 350 to 1500 g/mol, as determined by gel permeation chromatography in buffered water at pH 7, and where the ratio $M_W/M_N$ is in the range from 1.1 to 10, in particular in the range from 2 to 6.

While the copolymers of the present invention may have any molecular architecture, they are preferably statistical copolymers. Statistical copolymers are understood as copolymers, in which the distribution of the two monomers, here acrylic acid and the $C_1$-$C_3$ alkyl acrylate, in the chain follows a statistical distribution. In other words, the ratio of the monomers in a section corresponds to the molar ratio of the monomers (random distribution). The copolymers may have a linear or branched structure, but preferably they are essentially linear. The copolymers are in particular statistical copolymers having a linear structure.

In one precautionary embodiment, the copolymer is not an acrylic acid/ethyl acrylate copolymer having a molar ratio of acrylic acid to ethyl acrylate of 4:1 and a weight average molecular weight $M_W$ of 2,000 g/mol (the $M_W$ relating either to the copolymer in the form of its sodium salt or in form of the free acid), as determined by gel permeation chromatography (i.e. in an embodiment the copolymer is not the acrylic acid/ethyl acrylate copolymer possibly used in the comparative example of CA 1,205,348).

The copolymers of the present invention can be prepared by copolymerization acrylic acid and at least one $C_1$-$C_3$ alkyl acrylate by analogy to known methods for copolymerizing ethylenically unsaturated monomers as described e.g. in "Polymer Chemistry" by S. Koltzenburg, M. Maskos, O. Nuyken (Springer-Verlag 2017) and D. Braun et al, "Praktikum der Makromolekularen Stoffe" and the literature cited therein.

Preferably, the copolymer is obtainable by a free-radical solution copolymerization of acrylic acid and at least one $C_1$-$C_3$ alkyl acrylate. More preferably, the copolymer is obtainable by a free-radical aqueous solution copolymerization of acrylic acid and at least one $C_1$-$C_3$ alkyl acrylate. The term "free-radical polymerization" means that the polymerization of the ethylenically unsaturated monomers, here acrylic acid and the $C_1$-$C_3$ alkyl acrylate, is performed in the presence of a polymerization initiator, which, under polymerization conditions, forms radicals, either by thermal or photolytic decomposition or by a redox reaction. "Solution polymerization" means that in the polymerization reaction the monomers are present in solution in a solvent which is also capable of dissolving the copolymer. A free-radical solution copolymerization is thus a polymerization performed in solution and in the presence of a polymerization initiator forming radicals under polymerization conditions. "Aqueous solution polymerization" means that solvent comprises or consists of water.

Suitable solvents for performing the solution polymerization include water and polar organic solvents and mixtures thereof with water. Suitable polar organic solvents are those, which are at least partially miscible with water and which preferably are miscible with water to an extent of at least 100 g/L at 20°C and ambient pressure. Suitable organic solvents include, but are not limited to $C_1$-$C_4$-alkanols, such as methanol, ethanol, propanol, isopropanol (= 2-propanol), n-butanol, sec-butanol (= 2-butanol) or isobutanol, glycols, such as ethylene glycol or diethylene glycol, dimethyl sulfoxide, dimethyl formamide, tetrahydrofuran or the dioxans. Preferred organic solvents are selected from $C_1$-$C_4$-alkanols, such as methanol, ethanol, propanol, isopropanol, n-butanol, sec-butanol or isobutanol, preferably isopropanol or sec-butanol. In particular, solvents for performing the solution polymerization are selected from water and mixtures of water and at least one polar organic solvent, preferably from water and mixtures of water and one or more $C_1$-$C_4$-alkanols. Especially, the solvent used for the copolymerisation of acrylic acid and the $C_1$-$C_3$ alkyl acrylate contains at least 50% by volume, in particular at least 70% by volume, based on the total amount of solvent.

If the copolymerisation of acrylic acid and the $C_1$-$C_3$ alkyl acrylate is conducted as a solution polymerization, the concentration of the monomers in the polymerization reaction may vary. In particular, the weight ratio of the monomers and the solvent will be in the range from 1:20 to 1.2:1, in particular in the range from 1:10 to 1:1 and especially in the range from 1:8 to 1:1.5.

The copolymerisation of acrylic acid and the $C_1$-$C_3$ alkyl acrylate is preferably a free-radical copolymerization and thus triggered by means of a free-radical polymerization initiator (free-radical initiator). These may in principle be peroxides or azo compounds. Of course, redox initiator systems may also be used.

Suitable peroxides may, in principle, be inorganic peroxides, such as hydrogen peroxide or peroxodisulfates, such as the mono- or di-alkali metal or ammonium salts of peroxodisulfuric acid, for example the mono- and disodium, -potassium or ammonium salts, or organic peroxides, e.g. peroxy acids and esters of peroxy acids, such as diisopropyl peroxydicarbonate, t-amyl perneodecanoate, t-butyl perneodecanoate, t-butyl perpivalate, t-amyl perpivalate, bis(2,4-dichlorobenzoyl) peroxide, diisononanoyl peroxide, didecanoyl peroxide, dioctanoyl peroxide, dilauroyl peroxide, bis(2-methylbenzoyl) peroxide, disuccinoyl peroxide, diacetyl peroxide, dibenzoyl peroxide, t-butyl per-2-ethylhexanoate, t-butyl-2-ethylhexanoate, bis(4-chlorobenzoyl) peroxide, t-butyl perisobutyrate, t-butyl permaleate, 1,1-bis(t-butyl peroxy)cyclohexane, t-butyl peroxyisopropylcarbonate, t-butyl perisononanoate, t-butyl peracetate, t-amyl perbenzoate, 3-(t-butylperoxy)-3-phenylphthalide or t-butyl perbenzoate, alkyl and cycloalkyl peroxides such as 1,1-bis(t-butyl peroxy)-3,5,5-trimethylcyclohexane, 2,2-bis(t-butylperoxy)butane (di-t-butyl peroxide), 2,2-bis-10-(t-butylperoxy)propane, 2,5-dimethyl-2,5-bis(t-butylperoxy)hexane, di(t-amyl) peroxide, $\alpha,\alpha'$-bis(t-butylperoxyisopropyl)benzene, 3,5-bis(t-butylperoxy)-3,5-dimethyl-1,2-dioxolane, di(t-butyl) peroxide, 2,5-dimethyl-2,5-bis(t-butylperoxy)hexyne, 3,3,6,6,9,9-hexamethyl-1,2,4,5-tetraoxacyclononane, p-menthane hydroperoxide, pinane hydroperoxide, aromatic peroxides such as dicumyl peroxide, diisopropylbenzene, mono-$\alpha$-hydroperoxide or cumene hydroperoxide. A suitable peroxide may also be hydrogen peroxide.

Typical azo initiators are, for example, 4,4'-azobis-4-cyanovaleric acid (ACVA), 2,2'-azobis(2-methylpropionamidine) dihydrochloride, 2,2'-azobis(2-methylpropionitrile) (AIBN), 2,2'-azobis(2-methylbutanenitrile), 2,2'-azobis(2,4-dimethylvaleronitrile), 1,1'-azobis(cyanocyclohexane), 1,1'-azobis(N,N-dimethylformamide), 2,2'-azobis(2-methylbutyronitrile), 2,2'-azobis(4-methoxy-2,4-dimethylvaleronitrile), 2,2'-azobis(2,4,4-trimethylpentane), 2,2'-azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile), 1,1'-azobis(1-cyclohexanecarbonitrile), 2,2'-azobis(isobutyramide) dihydrate, 2-phenylazo-2,4-dimethyl-4-methoxyvaleronitrile, dimethyl 2,2'-azobisisobutyrate, 2-(carbamoylazo)isobutyronitrile, 2,2'-azobis(2,4,4-trimethylpentane), 2,2'-azobis(2-methyl propane), 2,2'-azobis(N,N'-dimethyleneisobutyramidine), 2,2'-azobis(N,N'-dimethyleneisobutyramidine) hydrochloride, 2,2'-azobis(2-amidinopropane), 2,2'-azobis(2-amidinopropane) hydrochloride, 2,2'-azobis(2-methyl-N-[1,1-bis(hydroxymethyl)ethyl]propionamide), azobis(2-amidopropane) dihydrochloride or 2,2'-azobis(2-methyl-N[1,1-bis(hydroxymethyl)-2-hydroxyethyl]propionamide).

Typical redox initiators are, for example, mixtures of an oxidizing agent, such as hydrogen peroxide, peroxodisulfates or aforementioned peroxide compounds, and a reducing agent. Corresponding reducing agents, which may be used are sulfur compounds with a low oxidation state, such as alkali metal sulfites, for example potassium and/or sodium sulfite, alkali metal hydrogensulfites, for example potassium and/or sodium hydrogensulfite, alkali metal metabisulfites, for example potassium and/ or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide, salts of polyvalent metals, in particular Co(II) salts and Fe(II) salts, such as iron(II) sulfate, iron(II) ammonium sulfate or iron(II) phosphate, but also dihydroxymaleic acid, benzoin and/or ascorbic acid, and reducing saccharides, such as sorbose, glucose, fructose and/or dihydroxyacetone.

Preferably, the free-radical polymerization initiator comprises an inorganic peroxide, in particular a peroxodisulfate, such as the mono- or di-alkali metal or ammonium salts of peroxodisulfuric acid. In particular, the free-radical polymerization initiator is a redox initiator, which comprises an inorganic peroxide, in particular a peroxodisulfate, such as the mono- or di-alkali metal or ammonium salts of peroxodisulfuric acid as the oxidizing agent. In these redox initiators, the reducing agent is preferably selected from the group of sulfur compounds with a low oxidation state, such as alkali metal sulfites, for example potassium and/or sodium sulfite, alkali metal hydrogensulfites, for example potassium and/or sodium hydrogensulfite, alkali metal metabisulfites, for example potassium and/or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide. In these redox initiators, the molar amount of the reducing agent will exceed the molar amount of the oxidizing agent. In particular, the molar ratio of the reducing agent to the oxidizing agent is in the range from 1.5:1 to 100:1 and in particular in the range from 2:1 to 50:1.

The molecular weight of the copolymer can be adjusted by choosing a proper relative amount of the free-radical polymerization initiator with respect to the monomers to be polymerized. As a rule of thumb, increasing the relative amount of the free-radical polymerization initiator will result in a decrease of the molecular weight, while decreasing the relative amount of the free-radical polymerization initiator will result in an increased molecular weight. If the free-radical polymerization initiator is selected from redox initiators, an increase of the molar ratio of the reducing agent to the oxidizing agent will likewise result in a decreased molecular weight and vice versa. Typically, the amount of the free-radical polymerization initiator is in the range of 2 to 10 mmol, in particular 2.5 to 7 mmol per 1 mol of monomers to be copolymerized. In case of redox initiators, these ranges refer to the oxidizing agent.

The copolymerisation of acrylic acid and the $C_1$-$C_3$ alkyl acrylate is usually conducted at temperatures in the range from 30 to 150°C. Temperatures employed are frequently in the range from 40 to 120°C, in particular in the range from 50 to 110°C and especially in the range from 60 to 100°C.

The copolymerisation of acrylic acid and the $C_1$-$C_3$ alkyl acrylate can be carried out at a pressure of less than, equal to or greater than 1 atm (atmospheric pressure), and so the polymerization temperature may exceed 100°C and may be up to 150°C. Polymerization of the monomers is normally performed at ambient pressure, but it may also be performed under elevated pressure. In this case, the pressure may assume values of 1.1 to 15 bar (absolute) or even higher values. Frequently, the free-radical polymerization of the invention is conducted at ambient pressure (about 1 atm) with exclusion of oxygen, for example under an inert gas atmosphere, for example under nitrogen or argon.

The copolymerisation of acrylic acid and the $C_1$-$C_3$ alkyl acrylate can be polymerized e.g. by a batch or semi-batch procedure or by a continuous procedure. In the batch procedure, the monomers to be polymerized and optionally the solvent used in the polymerization procedure is charged to a reaction vessel, while the majority or the total amount of the polymerization initiator is added to the reaction vessel in the course of the polymerization reaction. In a semi batch procedure, at least a portion or the total amount of the free-radical polymerization initiator and solvent and optionally a small portion of the monomers are charged to the reaction vessel, and the majority of monomers to be polymerized are added to the reaction vessel in the course of the polymerization reaction. In a continuous process, the monomers and polymerization initiator and the solvent are continuously added to a reaction vessel, and the obtained copolymer is continuously discharged from the polymerization vessel. Preferably, the copolymerisation of acrylic acid and the $C_1$-$C_3$ alkyl acrylate is carried out as a semi-batch procedure. In particular, at least 90% of the monomers to be polymerized are added to the reaction vessel in the course of the polymerization reaction.

The copolymerisation of acrylic acid and the $C_1$-$C_3$ alkyl acrylate may also include a step where any residual monomers are removed, e.g. by physical means, such as distillation or by chemical means, i.e. by forced radical polymerization, e.g. by using a second free-radical polymerization initiator, which is added to the polymerization reaction after at least 90% of the monomers to be polymerized have been reacted. Preferably, the second free-radical polymerization initiator is an organic hydroperoxide, such as tert-butyl hydroperoxide.

The copolymer can typically be isolated from the resulting polymerization mixture by means of relatively customary methods, e.g. by means of precipitation or distillation. However, it is also possible to use the solution of the copolymers as obtained by solution polymerization of acrylic acid and the $C_1$-$C_3$ alkyl acrylate, in particular, if the solvent is water or contains water. Frequently, the concentration of the copolymer in such solutions is in the range from 10 to 50 wt.-%, in particular in the range from 15 to 40 wt.-%.

The copolymers of the present invention are particularly useful for inhibiting or reducing the formation of magnesium hydroxide containing scale, in particular brucite containing scale, in water bearing systems, in particular in water-treatment units, which are in permanent contact with Mg containing water and where thus a high risk exists that magnesium hydroxide containing scale will form.

Therefore, the present invention also relates to a method for reducing or inhibiting the formation of magnesium hydroxide containing scale, in particular brucite containing scale, in a water-treatment unit for processing Mg containing water, which comprises the addition of a copolymer as defined to the Mg containing water to be treated in the water-treatment unit, as defined in claim 12.

As mentioned above, a risk particularly exists in any water bearing system, in particular in water treatment units, where the Mg concentration of the water to be treated contains at least 15 ppm Mg, in particular at least 20 ppm Mg, or at least 50 ppm Mg or at least 100 ppm Mg, calculated as $Mg^{2+}$. As the solubility of $Mg(OH)_2$ decreases with increasing pH and also with increasing temperature, a particular risk for the formation of magnesium hydroxide containing scale exists if the water-treatment unit is operated at pH values of at least pH 5, e.g. in the range of pH 5 to pH 13, as determined at 22°C, and/or the water-treatment unit is operated at temperatures of at least 40°C, in particular at least 60°C. Therefore, according to particular embodiments of the invention, relate to the use and method of the invention, where at least one of the following conditions are met:

- The water to be treated contains at least 15 ppm Mg, in particular at least 20 ppm Mg, or at least 50 ppm Mg or at least 100 ppm Mg, calculated as $Mg^{2+}$;
- the water-treatment unit is operated at pH values of at least pH 5, e.g. in the range of pH 5 to pH 13, as determined at 22°C;
- the water-treatment unit is operated at temperatures of at least 40°C, in particular at least 60°C.

For effectively reducing or inhibiting the formation of magnesium hydroxide containing scale, the copolymer will be usually added to the Mg containing water to be treated in the water-treatment unit, such that a concentration of the copolymer in the Mg containing water to be treated in the water-treatment unit is at least 0.2 $g/m^3$, in particular at least 0.5 $g/m^3$, e.g. in the range from 0.2 to 300 $g/m^3$, preferably in the range of from 0.5 to 200 $g/m^3$, in particular in the range of from 1 to 150 $g/m^3$, e.g. from 4 to 120 $g/m^3$ or from 50 to 120 $g/m^3$. In a specific embodiment, the copolymer will be added to the Mg containing water to be treated in the water-treatment unit, such that a concentration of the copolymer in the Mg containing water to be treated in the water-treatment unit is in the range of from 0.2 to 20 $g/m^3$ or very specifically from 0.5 to 20 $g/m^3$.

In a particular group of embodiments, the water treatment unit is a seawater desalination unit, in particular a seawater desalination unit, which includes a multi effect distillation unit and/or a multi-stage-flushing distillation unit, or a seawater desalination unit having a reverse osmosis unit. The water to be processed in the seawater desalination unit may be seawater or brackish water. The copolymer may be dosed into the treatment unit at any state of the process, e.g. in the seawater or brackish water to be treated or in the distillation units or into the reverse osmosis unit.

In a particular group of embodiments, the water treatment unit is a greywater treatment unit, wherein greywater from a syngas process is treated. In a syngas process, the greywater cycle is a cycle, which is used to wash and cool the syngas in a two-step process and therefore contains a lot of suspended solids and has a high concentration of both Mg and Ca ions. The greywater system is sensitive to scaling and deposits due to the high suspended solids content and high hardness in the water. In particular, serious scaling can occur in the washing tower and nozzles as well as in the water return line to the sedimentation basin. Adding the copolymers of the present invention to the greywater cycle at the above dose rates will efficiently reduce scaling due to its capability of inhibiting the formation of both magnesium hydroxide and $CaCO_3$ scales.

The copolymers as defined herein are compatible with the anti-scaling agents, which are commonly used for reducing or inhibiting the formation of magnesium hydroxide containing scale, in particular in seawater desalination units or in greywater treatment units. Therefore, the copolymers as defined herein can be used in combination with a further anti-scaling agent, in particular with a scale dispersant, i.e. anti-scaling agents, which assist in dispersing insoluble inorganic material, which may form in the water-treatment unit. The use of the copolymers of the present invention may also be combined with conventional mechanical cleaning, such as sponge ball cleaning.

**Examples**

Abbreviations:

AA: acrylic acid
b.w.: by weight
DI-water: Deionized water
EA: ethyl acrylate
FNU Formazine Nephelometric Units
GPC: gel permeation chromatography
LSI: Langlier saturation index
$M_W$: weight average molecular weight
$M_N$: number average molecular weight
NaBS: Sodium bisulfite ($NaHSO_3$)
NaPS: Sodium persulfate ($Na_2S_2O_8$)
PP: polypropylene
PTFE: poly(tetrafluoroethene)
rpm: rotations per minute
TAC ($K_{S4,3}$): Total acid capacity ($K_{S4,3}$-value)

Polymer Analytics:

1) GPC

GPC was performed by using an Agilent 1200er Series equipped with a PSS Security Degasser and a column oven adjusted to 35°C and a detection system measuring the refractive index. Columns used (in the direction of flow):

1. PSS Suprema Guard Column
2. PSS Suprema 3000 Å
3. PSS Suprema 100 Å

Flow rate was 1 ml/min.

As an eluent, ultrapure Water (Merck Millipore) which supplemented with 0.1 M $NaNO_3$ and 0.01 M $NaH_2PO_4$/$Na_2HPO_4$ buffer to adjust pH 7 was used. Prior to use, the eluent was filtered over a 0.45 $\mu$m cellulose acetate filter membrane.

Polymer samples were diluted in a ratio of 1/10 with deionized water and adjusted to pH 7 by addition of 10% sodium hydroxide solution.

Samples were diluted with the eluent containing the internal standard ethylene glycol to reach a polymer concentration of 3-5g/liter. The samples are filtered with 0.45 $\mu$m cellulose acetate (or hydrophilized PTFE) syringe filters prior to measurement.

For calibration narrowly dispersed poly(acrylic acid) sodium salt standards of PSS (Polymer Standard Service GmbH Germany) with the following peak molecular weights in Dalton were used:

1. 1250
2. 1770
3. 2925
4. 7500
5. 16000
6. 28000
7. 62900
8. 82900
9. 193800
10. 467300

(All molecular weights refer to the sodium salt of polyacrylic acid.)

For calibration purposes, the GPC curves of the narrowly dispersed standard were analysed with regard to the retention volume of their refractive index intensity peak using the Win GPC UniChrom software from PSS (Polymer Standard Service GmbH Germany). A calibration correlation curve was created by means of polynomial fit (Polynomial 3).

2) Viscosity

The viscosity of the polymer solutions was measured at 20°C ± 0.5∘C by using a Brookfield digital viscosimeter (Brookfield Engineering Laboratories, Inc.) with spindle 61 at a rotational speed of 60 rpm.

3) pH measurement

pH was determined by direct measurement at 20°C ± 0.5∘C using a Mettler Toledo In lab routine pH electrode connected to a WTW 3210 pH meter (WTW Germany) calibrated by WTW buffer solutions.

Preparation examples:

The following polymerization reactions were carried out in a 1000 ml double jacket glass reactor connected to heating bath circulation thermostat, equipped with a 1.4751 stainless steel stirrer, a condenser connected to a bubble counter outlet, fitted with a thermocouple and two additional necks for charging and dosing liquids. Except for the outlet of the condenser, the reactor is sealed gas tight.

Preparation Example 1:

A mixture of water (300.0 g) and 10% b.w. sulfuric acid (0.3 g) was added to the reactor and heated to 70°C with stirring.
The initiator mixtures were prepared, charged into disposable PP syringes equipped with PTFE tubes (1 mm inner diameter) and mounted to syringe pumps:

1. Syringe 1: An aqueous 40% b.w. solution of sodium bisulfite (210.4 g),
2. Syringe 2: A solution sodium persulfate (4.84 g) in water (24.3 g).

A mixture of acrylic acid (263.61 g) and ethyl acrylate (40.7 g) was charged into a glass cylinder connected to a double piston pump.
Once the internal temperature of the reactor reached at least 65°C, about 4.5% of the aqueous sodium bisulfite solution (about 9.5 g) was charged to the reactor. The reactor temperature was set to automatic control with a target temperature of 70°C. Feeds of monomer and initiator solutions (Syringes 1 and 2) were started simultaneously within 4 minutes from this point at the respective feed rates. The feeds were dropped through separate dozing nozzles.
The feed/dosing times of the separate solutions were

* 40% b.w. aqueous solution of sodium bisulfite: 165 minutes
* sodium persulfate in water: 195 minutes
* monomer mixture: 180 minutes

10 minutes after the end of the last feed (sodium persulfate solution), a chaser solution of 70% b.w. tert. butyl hydroperoxide (1.0 g) in water (4.0 g) was gradually added by means of a syringe pump within 20 minutes, while cooling to 60°C to reduce potential residual monomer. 10 minutes after the end of the addition of the chaser solution, the polymerization mixture was cooled to 50°C. Then water was added (140 g). After the internal temperature of the reactor had dropped below 50°C, 50% b.w. aqueous NaOH (66.5 g) was added with a funnel while keeping the temperature below 55°C.
Remaining NaOH in the funnel was flushed with water (20.0 g) into the reactor. Residual bisulfite/$SO_2$ was determined iodometrically and converted by oxidation with an equimolar amount of hydrogen peroxide 30% (4.5 g), and the product was further cooled to <40°C. Water was added to adjust the solution to a total mass of 1000 g.
The resulting polymer solution had the following properties:

pH: 3.96 (20°C)
Viscosity (Brookfield): 25 mPas
$M_W$: 1040 [g/mol]:
$M_N$: 380 [g/mol]:

Preparation Examples 2 to 8 and Comparative Examples C4 to C7

The polymers of preparation examples 2 to 8 and of comparative examples C4 to C7 were prepared by analogy to the protocol of preparation example 1. The amounts of monomers and initiators are summarized in the following table 1. The properties of the resulting polymer solutions are summarized in table 2.

Comparative Example C1:

A mixture of water (250.0 g) and 10% b.w. sulfuric acid (0.3 g) was added to the reactor and heated to 80°C with stirring (Stirrer speed: 200 rpm).
The initiator solutions were prepared, charged into disposable PP syringes equipped with PTFE tubes (1 mm inner diameter) and mounted to syringe pumps:

   1. Syringe 1: An aqueous 40% b.w. solution of sodium bisulfite (147.0 g),
   2. Syringe 2: A solution sodium persulfate (6.4 g) in water (24.3 g).

Acrylic acid (310.0 g) was charged into a glass cylinder connected to a double piston pump.
Once the internal temperature of the reactor reached at least 75°C, about 4.5% of the aqueous sodium bisulfite solution (about 6.6 g) was charged to the reactor. The reactor temperature was set to automatic control with a target temperature of 80°C. Feeds of monomer and initiator solutions (Syringes 1 and 2) were started simultaneously within 4 minutes from this point at the respective feed rates. The feeds were dropped through separate dozing nozzles.
The feed/dosing times of the separate solutions were

•   40% b.w. aqueous solution of sodium bisulfite: 165 minutes
•   sodium persulfate in water: 195 minutes
•   monomer mixture: 180 minutes

10 minutes after the end of the last feed (sodium persulfate solution), the polymerization mixture was cooled to 50°C. Then water was added (200 g). After the internal temperature of the reactor had dropped below 50°C, 50% b.w. aqueous NaOH (81.2 g) was added with a funnel while keeping the temperature below 55°C.
Remaining NaOH in the funnel was flushed with water (20.0 g) into the reactor.
Residual bisulfite/$SO_2$ was determined iodometrically and converted by oxidation with an equimolar amount of hydrogen peroxide 30% (7.3 g), and the product was further cooled to <40°C. Water was added to adjust the solution to a total mass of 1000 g.
The resulting polymer solution had the following properties:

pH: 3.9 (20°C)
Viscosity (Brookfield): 35 mPas
$M_W$: 1640 [g/mol]
$M_N$: 350 [g/mol]

Comparative Examples C2 to C3

The polymers of comparative examples 2 and 3 were prepared by analogy to the protocol of comparative example C1. The amounts of monomers and initiators are summarized in the following table 1. The properties of the resulting polymer solutions are summarized in table 2.

[Table 1]

Table 1:

| Prep. Ex. # | AA [g] | EA [g] | EA [%] [1] | NaBS [g] [2] | NaPS [g] | NaOH (50%) [g] |
|---|---|---|---|---|---|---|
| 1 | 263.61 | 40.70 | 13.4 | 210.4 | 4.84 | 66.5 |
| 2 | 263.61 | 40.70 | 13.4 | 105.7 | 4.84 | 66.5 |
| 3 | 283.56 | 20.74 | 6.8 | 214.5 | 4.93 | 67.8 |
| 4 | 284.22 | 20.08 | 6.6 | 142.6 | 3.11 | 67.8 |
| 5 | 408.60 | 28.87 | 6.6 | 205.3 | 4.5 | 97.5 |

(continued)

| Prep. Ex. # | AA [g] | EA [g] | EA [%] [1] | NaBS [g] [2] | NaPS [g] | NaOH (50%) [g] |
|---|---|---|---|---|---|---|
| 6 | 225.85 | 78.45 | 25.8 | 203.8 | 4.66 | 64.1 |
| 7 | 225.85 | 78.45 | 25.8 | 101.9 | 4.66 | 64.1 |
| 8 | 225.85 | 78.45 | 25.8 | 67.9 | 3.11 | 62.7 |
| C1 | 310.00 | 0 | 0 | 147.0 | 6.40 | 81.2 |
| C2 | 310.00 | 0 | 0 | 112.0 | 5.12 | 81.2 |
| C3 | 310.00 | 0 | 0 | 94.4 | 4.27 | 81.2 |
| C4 | 283.56 | 20.74 | 6.8 | 53.9 | 2.50 | 67.8 |
| C5 | 263.60 | 40.70 | 13.4 | 70.5 | 3.20 | 65.0 |
| C6 | 263.60 | 40.70 | 13.4 | 52.8 | 2.40 | 66.5 |
| C7 | 263.60 | 40.70 | 13.4 | 42.3 | 1.90 | 65.0 |
| [1] % b.w. of EA, based on total amount of monomers [2] Amount of 40% b.w. aqueous solution of NaBS | | | | | | |

[Table 2]

Table2:

| Prep. Ex. # | AA [mol-%] | EA [mol-%] | Visc. [mPas] | $M_W$ | $M_N$ |
|---|---|---|---|---|---|
| 1 | 90 | 10 | 25 | 1040 | 380 |
| 2 | 90 | 10 | 35 | 2600 | 830 |
| 3 | 95 | 5 | 27 | 1020 | 390 |
| 4 | 95 | 5 | 35 | 2060 | 670 |
| 5 | 95 | 5 | 60 | 1800 | 580 |
| 6 | 80 | 20 | 24 | 1030 | 370 |
| 7 | 80 | 20 | 38 | 2650 | 790 |
| 8 | 80 | 20 | 47 | 4100 | 950 |
| C1 | 100 | 0 | 35 | 1640 | 350 |
| C2 | 100 | 0 | 38 | 2170 | 450 |
| C3 | 100 | 0 | 51 | 3150 | 640 |
| C4 | 95 | 5 | 82 | 7380 | 2150 |
| C5 | 90 | 10 | 56 | 4500 | 1150 |
| C6 | 90 | 10 | 75 | 7350 | 2100 |
| C7 | 90 | 10 | 104 | 9100 | 2330 |

Application tests:

1) Tests for stabilization of $Mg(OH)_2$ in aqueous solutions

The solutions of the respective copolymer solutions obtained in the above examples were diluted to a concentration of 50 g/L and used as stock solutions.

A test solution containing 8.22 $mol/m^3$ $Mg^{2+}$ was prepared by dissolving a proper amount of magnesiumsulfate

heptahydrate ($MgSO_4 * 7 H_2O$) in deionized water. Then, 100 mL of the prepared solution was filled in a 100 mL Schott flask. Then, a defined amount of the polymer stock solution to give 100 ppm of active substance was added with stirring.

For each test series, a blank sample (without polymer) was tested. The pH of the respective test solution (also of the blank sample) was adjusted with 0.01 M HCl to pH 3.50 ± 0.01, and 0.141 ML of 10% b.w. aqueous NaOH was added with stirring. The pH of the solution was 11.5. Then, the flask was closed and left for 24 h at 22°C. Thereafter, the samples were shaken in order to distribute the precipitate evenly, and 10 mL of the sample was taken out, and the turbidity in FNU units of each sample was measured immediately by means of a turbidity meter (Hach). To check whether the experiment was carried out when a steady state had been reached, two blank samples were kept for a total of 48 h at 22°C and the turbidity of these samples was determined both after 24 h and after 48 h. The turbidity after 48 h was essentially unchanged as compared to that after 24 h, meaning that latest after 24 h scale formation had reached a steady state. The degree of stabilization was calculated as follows:

[Math.1]

$$Stabilization\,[\%] = \frac{turbidity\,[FNU]_{blank} - turbidity\,[FNU]_{sample}}{turbidity\,[FNU]_{blank}} * 100\%$$

From the thus obtained stabilization values, turbidity measurements at 100 ppm of active concentration are given in table 5. The turbidity of the blank had 21.3 FNU.

2) Tests for stabilization of $CaCO_3$ in aqueous solutions

To show that the copolymers according to the present invention also work as scale inhibitors for $CaCO_3$ as the most common scale type, some representative polymers were tested and compared to prior art scale inhibitors.

Evaluation of dynamic calcium carbonate scale inhibition was conducted in a test apparatus, which comprises a beaker (1) for test water, which is connected to a hose pump (2), a vertically mounted, thermostated glass cooler (3) with a helical internal glass tube and a cooling jacket (Fa. Normag; Art.-Nr.: GSG 01069 02, 16 loops), where the helical tube is connected via the bottom inlet to the hose pump (2) and via its upper outlet to a measuring cylinder (4). A test solution of the composition according to Table 3 was prepared. First $CaCl_2 \cdot 2 H_2O$ and $MgSO_4 \cdot 7 H_2O$ were mixed, then the inhibitor in a concentration of 4 ppm was added, and sodium hydrogen carbonate solution was introduced as last. Over a two hour period 1 L of the test solution was pumped at a constant flow rate of 0.5 L/h through the helical glass tube heated by water of 80°C. Then the water left in the cooler was pumped back with a reduced flow rate to avoid removal of loose precipitate. The exact amount of collected water was determined with a measuring cylinder. The calcium carbonate precipitated on the glass surface of the glass tube was dissolved with 16 % hydrochloric acid (32% HCl with deionized water, diluted 1:1), and flushed into a 100 mL measuring flask. To remove hydrochloric acid residues, the glass cooler was flushed with 70 mL of deionized water which was collected in the same measuring flask. Deionized water was added to this flask to obtain a total volume of 100 mL. 10 mL of the solution were pipetted in an Erlenmeyer flask for titration which was then filled-up with 70 mL of deionized water. This solution was mixed with 5 mL of 50 % KOH and then titrated with an EDTA complexation solution using the indicator Calcon carboxylic acid. Comparison against a blind sample provided the relative calcium carbonate inhibition of the tested compound.

Following sources for the ionic components of the test water were used:

Source of calcium and chloride ions: $CaCl_2 \cdot 2 H_2O$
Source of magnesium and sulphate ions: $MgSO_4 \cdot 7 H_2O$
Source of sodium and hydrogencarbonate ions: $NaHCO_3$

[Table 3]

Table 3: Water composition used in $CaCO_3$ stabilization test

| Ion | Concentration [ppm] |
|---|---|
| $Ca^{2+}$ | 214.3 |
| $Mg^{2+}$ | 43.4 |

(continued)

| Ion | Concentration [ppm] |
|---|---|
| $Na^+$ | 459.7 |
| $HCO_3^-$ | 1220.0 |
| $Cl^-$ | 379.1 |
| $SO_4^{2-}$ | 171.5 |

Based on the consumption of the EDTA solution the calcium carbonate stabilization can be calculated by the following equation.

[Math.2]

$$Stabilization\,[\%] = 100 - \frac{comp\_sample * vol\_blank * 100\,\%}{comp\_blank * vol\_sample}$$

- comp_sample: consumption EDTA-solution in mL in the sample with raw material
- comp_blank: consumption EDTA-solution in mL in the blank
- vol_sample: sample volume in the measuring cylinder in mL
- vol_blank: volume of blank solution in measuring cylinder in mL

From the thus obtained stabilization values, for each tested copolymer measurements at 4 ppm of polymer concentration were taken and given in table 5.

3) Tests for stabilization of $CaSO_4$ in aqueous solutions

For assessing the stabilization of $CaSO_4$ 100 mL of solution with the composition mentioned in table 4 is prepared.

[Table 4]

Table 4: Water composition used in $CaSO_4$ stabilization test

| $Ca^{2+}$ [mol/m$^3$] | 100 |
|---|---|
| $SO_4^{2-}$ [mol/m$^3$] | 100 |
| $Na^+$ [mol/l] [mol/m$^3$] | 166 |
| Cl- [mol/m$^3$] | 166 |
| pH | 8.5 |

Then, the flasks were observed visually with regard to the precipitation of calcium sulfate for 24 h. The dispersed calcium sulfate forms a white cloud in the solution. For each copolymer concentration 3 replications of this test are carried out.

For each replication, the formation of calcium sulfate is ranked for the first five hours (each hour) and then 24 h after by the degree of cloudiness by the following grades:

Cloudy 0
slightly cloudy 0.5
clear 1

Preparations are done with including the copolymers (25 ppm) and as blank.

If the blank solution does not become cloudy within 4 h, the test is repeated.

The data are evaluated as follows: For each concentration of the copolymer, the grade of cloudiness after 24 is multiplied by 4 and summed up with the grades of cloudiness after 1, 2, 3, 4 and 5 h. The obtained value is divided by 9. The average of the thus obtained values for the 3 replications multiplied by 100 is the degree of stabilization in % at the given concentration of the copolymer.

[Table 5]

Table 5:

| Prep. Ex. # | Stabilization [%] | | |
| --- | --- | --- | --- |
| | Brucite | $CaCO_3$ | $CaSO_4$ |
| 1 | 31 | 28 | 72 |
| 2 | 20 | 79 | 75 |
| 3 | 31 | 52 | 70 |
| 4 | 15 | 77 | 76 |
| 5 | 21 | 76 | 85 |
| 6 | 40 | 23 | 53 |
| 7 | 31 | 56 | 63 |
| 8 | 20 | 58 | n.d. |
| C1 | 0 | 68 | n.d. |
| C2 | 0 | 74 | n.d. |
| C3 | 0 | 66 | n.d. |
| C4 | 0 | n.d. | n.d. |
| C5 | 0 | n.d. | n.d. |
| C6 | 0 | n.d. | n.d. |
| C7 | 0 | n.d. | n.d. |

**Claims**

1. The use of a copolymer, which consists of at least 95% by weight, based on the total weight of the copolymer in its acid form, of a combination of polymerized units of acrylic acid and polymerized units of a $C_1$-$C_3$ alkyl acrylate, where the amount of polymerized units of the $C_1$-$C_3$ alkyl acrylate is in the range from 3 to 30% by weight, based on the total weight of the copolymer in its acid form, and where the copolymer in the form of its sodium salt has a weight average molecular weight $M_w$ in the range from 500 to 4000 g/mol, as determined by gel permeation chromatography in buffered water at pH 7, for reducing the formation of magnesium hydroxide containing scale.

2. The use of claim 1, where the copolymer in the form of its sodium salt has a weight average molecular weight in the range from 700 to 4000 g/mol, as determined by gel permeation chromatography in buffered water at pH 7.

3. The use of claim 2, where the copolymer in the form of its sodium salt has a weight average molecular weight in the range from >1000 to 4000 g/mol, in particular in the range from >1000 to 3000 g/mol, as determined by gel permeation chromatography in buffered water at pH 7.

4. The use of any one of the preceding claims, where the copolymer in the form of its sodium salt has a number average molecular weight in the range from 300 to 3000 g/mol, as determined by gel permeation chromatography in buffered water at pH 7;

where preferably the ratio of the weight average molecular weight $M_w$ to the number average molecular weight $M_n$ is in the range from 1.1 to 10, in particular in the range from 2 to 6.

5. The use of any one of the preceding claims, where the amount of polymerized units of the $C_1$-$C_3$ alkyl acrylate is in the range of 4 to 28% by weight, based on the total weight of the copolymer in the form of its sodium salt; and/or
where molar ratio of polymerized acrylic acid to the polymerized $C_1$-$C_3$ alkyl acrylate is in the range from 70:30 to 97:3, in particular in the range from 75:25 to 96:4 and especially in the range from 78:22 to 95:5.

6. The use of any one of the preceding claims, where the $C_1$-$C_3$ alkyl acrylate is ethyl acrylate.

7. The use of any one of the preceding claims, where the copolymer is a statistical copolymer.

8. The use of any one of the preceding claims, where the copolymer is obtainable by a free-radical aqueous solution copolymerization of acrylic acid and a $C_1$-$C_3$ alkyl acrylate.

9. The use of any one of the preceding claims, where the copolymer does not contain more than 1000 ppm of phosphorous.

10. The use of any one of the preceding claims, where the formation of magnesium hydroxide containing scale occurs in a seawater desalination unit;
or
where the formation of magnesium hydroxide containing scale occurs in a greywater treatment unit, in particular in a greywater treatment unit, wherein greywater from a syngas process is treated.

11. The use of any one of the preceding claims, where the copolymer is used in combination with a further anti-scaling agent, in particular with a scale dispersant.

12. A method for reducing the formation of magnesium hydroxide containing scale in a water-treatment unit for processing Mg containing water, which comprises the addition of a copolymer as defined in any one of claims 1 to 9 to the Mg containing water to be treated in the water-treatment unit;

where the water-treatment unit is a seawater desalination unit, and where the water to be processed is seawater or brackish water;
or
where the water-treatment unit is a greywater treatment unit wherein greywater from a syngas process is treated.

13. The method of claim 12, where the seawater desalination unit is a thermal seawater desalination unit, in particular a thermal seawater desalination unit, which includes a multi-effect distillation unit and/or a multi-stage-flushing distillation unit, or a seawater desalination unit having a reverse osmosis unit.

14. The method of any one of claims 12 to 13, where the copolymer is added to the Mg containing water to be treated in the water-treatment unit, such that a concentration of the copolymer in the Mg containing water to be treated in the water-treatment unit is in the range from 0.2 to 300 $g/m^3$, preferably in the range from 0.5 to 300 $g/m^3$, in particular in the range from 1 to 150 $g/m^3$, where specifically the copolymer is added to the Mg containing water to be treated in the water-treatment unit, such that a concentration of the copolymer in the Mg containing water to be treated in the water-treatment unit is in the range from 0.2 to 20 $g/m^3$.

15. The method of any of claims 12 to 14, where the water treatment unit is operated at a pH level in the range of pH 5 to pH 13, as determined at 22°C.

16. The method of any of claims 12 to 15, where water to be treated in the water treatment unit contains at least 15 ppm Mg calculated as $Mg^{2+}$.

**Patentansprüche**

1. Verwendung eines Copolymers, das aus wenigstens 95 Gew.-%, bezogen auf das Gesamtgewicht des Copolymers in seiner Säureform, aus einer Kombination von polymerisierten Einheiten von Acrylsäure und polymerisierten Einheiten eines $C_1$-$C_3$-Alkylacrylats besteht, wobei die Menge der polymerisierten Einheiten des $C_1$-$C_3$-Alkylacrylats im Bereich von 3 bis 30 Gew.-%, bezogen auf das Gesamtgewicht des Copolymers in seiner Säureform, liegt und wobei das Copolymer in der Form seines Natriumsalzes ein gewichtsmittleres Molekulargewicht $M_W$ im Bereich von 500 bis 4000 g/mol aufweist, wie bestimmt durch Gelpermeationschromatographie in gepuffertem Wasser bei pH 7, zur Verringerung der Bildung von Magnesiumhydroxid-haltigen Ablagerungen.

2. Verwendung gemäß Anspruch 1, wobei das Copolymer in der Form seines Natriumsalzes ein gewichtsmittleres Molekulargewicht im Bereich von 700 bis 4000 g/mol, wie bestimmt durch Gelpermeationschromatographie in gepuffertem Wasser bei pH 7, aufweist.

3. Verwendung gemäß Anspruch 2, wobei das Copolymer in der Form seines Natriumsalzes ein gewichtsmittleres Molekulargewicht im Bereich von >1000 bis 4000 g/mol, insbesondere im Bereich von >1000 bis 3000 g/mol, wie bestimmt durch Gelpermeationschromatographie in gepuffertem Wasser bei pH 7, aufweist.

4. Verwendung gemäß einem der vorstehenden Ansprüche, wobei das Copolymer in der Form seines Natriumsalzes ein zahlenmittleres Molekulargewicht im Bereich von 300 bis 3000 g/mol, wie bestimmt durch Gelpermeationschromatographie in gepuffertem Wasser bei pH 7, aufweist;
wobei vorzugsweise das Verhältnis des gewichtsmittleren Molekulargewichts $M_W$ zum zahlenmittleren Molekulargewicht $M_n$ im Bereich von 1,1 bis 10, insbesondere im Bereich von 2 bis 6, liegt.

5. Verwendung gemäß einem der vorstehenden Ansprüche, wobei die Menge an polymerisierten Einheiten des $C_1$-$C_3$-Alkylacrylats im Bereich von 4 bis 28 Gew.-%, bezogen auf das Gesamtgewicht des Copolymers in der Form seines Natriumsalzes, liegt;
und/oder
wobei das Molverhältnis von polymerisierter Acrylsäure zu polymerisiertem Ci-Cs-Alkylacrylat im Bereich von 70:30 bis 97:3, insbesondere im Bereich von 75:25 bis 96:4 und besonders im Bereich von 78:22 bis 95:5 liegt.

6. Verwendung gemäß einem der vorstehenden Ansprüche, wobei das $C_1$-$C_3$-Alkylacrylat Ethylacrylat ist.

7. Verwendung gemäß einem der vorstehenden Ansprüche, wobei das Copolymer ein statistisches Copolymer ist.

8. Verwendung gemäß einem der vorstehenden Ansprüche, wobei das Copolymer erhältlich ist durch eine radikalische Copolymerisation in wässriger Lösung von Acrylsäure und einem Ci-Cs-Alkylacrylat.

9. Verwendung gemäß einem der vorstehenden Ansprüche, wobei das Copolymer nicht mehr als 1000 ppm Phosphor enthält.

10. Verwendung gemäß einem der vorstehenden Ansprüche, wobei die Entstehung von Magnesiumhydroxid-haltigen Ablagerungen in einer Meerwasserentsalzungseinheit stattfindet;
oder
wobei die Entstehung von Magnesiumhydroxid-haltigen Ablagerungen in einer Grauwasserbehandlungseinheit stattfindet, insbesondere in einer Grauwasserbehandlungseinheit, in der Grauwasser aus einem Syngasverfahren behandelt wird.

11. Verwendung gemäß einem der vorstehenden Ansprüche, wobei das Copolymer in Kombination mit einem weiteren Ablagerungsschutzmittel, insbesondere einem Ablagerungs-Dispergiermittel, verwendet wird.

12. Verfahren zum Verringern der Entstehung von Magnesiumhydroxid-haltigen Ablagerungen in einer Wasserbehandlungseinheit zum Verarbeiten von Mg-haltigem Wasser, umfassend die Zugabe eines Copolymers gemäß einem der Ansprüche 1 bis 9 zu dem Mg-haltigen Wasser, das in der Wasserbehandlungseinheit behandelt werden soll;

wobei die Wasserbehandlungseinheit eine Meerwasserentsalzungseinheit ist und wobei das zu verarbeitende Wasser Meerwasser oder Brackwasser ist;
oder
wobei die Wasserbehandlungseinheit eine Grauwasserbehandlungseinheit ist, in der Grauwasser aus einem Syngasverfahren behandelt wird.

13. Verfahren gemäß Anspruch 12, wobei die Meerwasserentsalzungseinheit eine thermische Meerwasserentsalzungseinheit ist, insbesondere eine thermische Meerwasserentsalzungseinheit, die eine Mehreffektdestillationseinheit und/oder eine mehrstufige Spül-Destillationseinheit enthält, oder eine Meerwasserentsalzungseinheit mit einer Umkehrosmoseeinheit.

14. Verfahren gemäß einem der Ansprüche 12 bis 13, wobei das Copolymer zum Mg-haltigen Wasser, das in der Wasserbehandlungseinheit behandelt werden soll, so zugegeben wird, dass eine Konzentration des Copolymers im Mg-haltigen Wasser, das in der Wasserbehandlungseinheit behandelt werden soll, im Bereich von 0,2 bis 300 $g/m^3$ liegt, vorzugsweise im Bereich von 0,5 bis 300 $g/m^3$, insbesondere im Bereich von 1 bis 150 $g/m^3$, wobei spezifisch das Copolymer zum Mg-haltigen Wasser, das in der Wasserbehandlungseinheit behandelt werden soll, so zugegeben wird, dass eine Konzentration des Copolymers im Mg-haltigen Wasser, das in der Wasserbehandlungseinheit behandelt werden soll, im Bereich von 0,2 bis 20 $g/m^3$ liegt.

15. Verfahren gemäß einem der Ansprüche 12 bis 14, wobei die Wasserbehandlungseinheit bei einem pH-Niveau im Bereich von pH 5 bis pH 13, wie bestimmt bei 22 °C, betrieben wird.

16. Verfahren gemäß einem der Ansprüche 12 bis 15, wobei Wasser, das in der Wasserbehandlungseinheit behandelt werden soll, wenigstens 15 ppm Mg, berechnet als $Mg^{2+}$, enthält.

## Revendications

1. Utilisation d'un copolymère, qui est constitué d'au moins 95 % en poids, sur la base du poids total du copolymère sous sa forme d'acide, d'une combinaison de motifs polymérisés d'acide acrylique et de motifs polymérisés d'un acrylate d'alkyle en $C_{1-3}$, la quantité de motifs polymérisés de l'acrylate d'alkyle en $C_{1-3}$ étant dans la plage de 3 à 30 % en poids, sur la base du poids total du copolymère sous sa forme d'acide, et le copolymère sous la forme de son sel de sodium ayant un poids moléculaire moyen en poids $M_W$ dans la plage de 500 à 4 000 g/mole, comme déterminé par chromatographie à perméation de gel dans de l'eau tamponnée à pH 7, pour la réduction de la formation d'incrustations contenant de l'hydroxyde de magnésium.

2. Utilisation selon la revendication 1, le copolymère sous la forme de son sel de sodium ayant un poids moléculaire moyen en poids dans la plage de 700 à 4 000 g/mole, comme déterminé par chromatographie à perméation de gel dans de l'eau tamponnée à pH 7.

3. Utilisation selon la revendication 2, le copolymère sous la forme de son sel de sodium ayant un poids moléculaire moyen en poids dans la plage de > 1 000 à 4 000 g/mole, en particulier dans la plage de > 1 000 à 3 000 g/mole, comme déterminé par chromatographie à perméation de gel dans de l'eau tamponnée à pH 7.

4. Utilisation selon l'une quelconque des revendications précédentes, le copolymère sous la forme de son sel de sodium ayant un poids moléculaire moyen en nombre dans la plage de 300 à 3 000 g/mole, comme déterminé par chromatographie à perméation de gel dans de l'eau tamponnée à pH 7 ; préférablement le rapport du poids moléculaire moyen en poids $M_w$ sur le poids moléculaire moyen en nombre $M_n$ étant dans la plage de 1,1 à 10, en particulier dans la plage de 2 à 6.

5. Utilisation selon l'une quelconque des revendications précédentes, la quantité de motifs polymérisés de l'acrylate d'alkyle en $C_{1-3}$ étant dans la plage de 4 à 28 % en poids, sur la base du poids total du copolymère sous la forme de son sel de sodium ;
et/ou
un rapport molaire d'acide acrylique polymérisé sur l'acrylate d'alkyle en $C_{1-3}$ polymérisé étant dans la plage de 70 : 30 à 97 : 3, en particulier dans la plage de 75 : 25 à 96 : 4 et notamment dans la plage de 78 : 22 à 95 : 5.

6. Utilisation selon l'une quelconque des revendications précédentes, l'acrylate d'alkyle en $C_{1-3}$ étant l'acrylate d'éthyle.

7. Utilisation selon l'une quelconque des revendications précédentes, le copolymère étant un copolymère statistique.

8. Utilisation selon l'une quelconque des revendications précédentes, le copolymère pouvant être obtenu par une copolymérisation en solution aqueuse par radicaux libres d'acide acrylique et d'un acrylate d'alkyle en $C_{1-3}$.

**9.** Utilisation selon l'une quelconque des revendications précédentes, le copolymère ne contenant pas plus de 1 000 ppm de phosphore.

**10.** Utilisation selon l'une quelconque des revendications précédentes, la formation d'incrustations contenant de l'hydroxyde de magnésium ayant lieu dans une unité de dessalement d'eau de mer ;
ou
la formation d'incrustations contenant de l'hydroxyde de magnésium ayant lieu dans une unité de traitement d'eau grise, en particulier dans une unité de traitement d'eau grise dans laquelle de l'eau grise provenant d'un processus de gaz de synthèse est traitée.

**11.** Utilisation selon l'une quelconque des revendications précédentes, le copolymère étant utilisé en combinaison avec un agent anti-incrustations supplémentaire, en particulier avec un dispersant d'incrustations.

**12.** Procédé pour la réduction de la formation d'incrustations contenant de l'hydroxyde de magnésium dans une unité de traitement d'eau pour le traitement d'eau contenant du Mg, qui comprend l'ajout d'un copolymère tel que défini dans l'une quelconque des revendications 1 à 9 à l'eau contenant du Mg devant être traitée dans l'unité de traitement d'eau ;

l'unité de traitement d'eau étant une unité de dessalement d'eau de mer, et l'eau devant être traitée étant de l'eau de mer ou de l'eau saumâtre ; ou
l'unité de traitement d'eau étant une unité de traitement d'eau grise dans laquelle de l'eau grise provenant d'un processus de gaz de synthèse est traitée.

**13.** Procédé selon la revendication 12, l'unité de dessalement d'eau de mer étant une unité de dessalement d'eau de mer thermique, en particulier une unité de dessalement d'eau de mer thermique, qui comprend une unité de distillation multi-effet et/ou une unité de distillation à rinçage en plusieurs stades, ou une unité de dessalement d'eau de mer ayant une unité d'osmose inverse.

**14.** Procédé selon l'une quelconque des revendications 12 à 13, le copolymère étant ajouté à l'eau contenant du Mg devant être traitée dans l'unité de traitement d'eau, de sorte qu'une concentration du copolymère dans l'eau contenant du Mg devant être traitée dans l'unité de traitement d'eau soit dans la plage de 0,2 à 300 g/m$^3$, préférablement dans la plage de 0,5 à 300 g/m$^3$, en particulier dans la plage de 1 à 150 g/m$^3$, spécifiquement le copolymère étant ajouté à l'eau contenant du Mg devant être traitée dans l'unité de traitement d'eau, de sorte qu'une concentration du copolymère dans l'eau contenant du Mg devant être traitée dans l'unité de traitement d'eau soit dans la plage de 0,2 à 20 g/m$^3$.

**15.** Procédé selon l'une quelconque des revendications 12 à 14, l'unité de traitement d'eau étant exploitée à un niveau de pH dans la plage de pH 5 à pH 13, comme déterminé à 22 °C.

**16.** Procédé selon l'une quelconque des revendications 12 à 15, l'eau devant être traitée dans l'unité de traitement d'eau contenant au moins 15 ppm de Mg calculés comme Mg$^{2+}$.

## REFERENCES CITED IN THE DESCRIPTION

**Patent documents cited in the description**

- EP 0009304 A1
- EP 0089189 A1
- EP 0818423 A1

- US 4517098 A
- AU 5913765
- CA 1205348

**Non-patent literature cited in the description**

- **Z. AMJAD.** *Corrosion 96, paper 230*
- **M. AK. AL-SOFI.** *European Conference on Desalination and the Environment,* 1999, vol. 3, 61-76
- **S. PATEL et al.** *Desalination,* 1999, vol. 124, 63-74

- **A. HAMZAH et al.** *Desalination,* 2015, vol. 259, 22-25
- **S. KOLTZENBURG ; M. MASKOS ; O. NUYKEN.** Polymer Chemistry. Springer-Verlag, 2017
- **D. BRAUN et al.** *Praktikum der Makromolekularen Stoffe*